# EUROPÄISCHE PATENTSCHRIFT

(11) **EP 2 456 627 B1**
(45) Veröffentlichungstag und Bekanntmachung des Hinweises auf die Patenterteilung: **01.10.2014**
(21) Anmeldenummer: 10787012.3
(22) Anmeldetag: 19.11.2010
(51) Int. Cl.: B60H 1/00, B60H 1/32

(54) **AXIALGEBLÄSEANORDNUNG**
AXIAL-FLOW BLOWER ARRANGEMENT
SYSTÈME DE SOUFFLANTE AXIALE

(30) Priorität: 24.11.2009 DE 102009054343; 18.12.2009 DE 102009058855
(43) Veröffentlichungstag der Anmeldung: 30.05.2012
(73) Patentinhaber: Spheros GmbH, 82205 Gilching (DE)
(72) Erfinder: SCHALLER, Ralph, 86899 Landsberg am Lech (DE); SCHEID, Helmut, 86920 Denklingen (DE); ELLINGER, Klaus, 82131 Gauting (DE); BERGER, Uwe, 82008 Unterhaching (DE)
(74) Vertreter: Strasser, Wolfgang
(86) Internationale Anmeldenummer: PCT/EP2010/007046
(87) Internationale Veröffentlichungsnummer: WO 2011/063916

(56) Entgegenhaltungen:
- EP-A1- 1 340 634
- WO-A1-2008/061519
- DE-U1-202008 002 054

## Beschreibung

Die Erfindung betrifft eine Axialgebläseanordnung für den Kondensator einer auf einem Fahrzeugdach zu montierenden Klimaanlage gemäß dem Oberbegriff von Anspruch 1.

Es ist aus dem Stand der Technik bekannt, zur Klimatisierung von Fahrzeugen, insbesondere von Omnibussen, auf dem Dach montierte Klimaanlagen zu verwenden, in denen alle zur Klimatisierung benötigten Komponenten integriert sind.

Eine besondere bekannte Ausführungsform stellen dabei so genannte einteilige Kompaktanlagen dar, bei denen alle Komponenten in einer Trag- oder Wannenstruktur mit weiteren Gehäuseteilen und Verkleidungen auf dem Fahrzeugdach montiert werden. In der Regel werden in Fahrtrichtung gesehen links und rechts von der Fahrzeugmitte Verdampferwannen angeordnet, die zusammen mit den in ihnen aufgenommenen Komponenten als Verdampfereinheiten bezeichnet werden. Zwischen den Verdampfereinheiten wird bei diesem Anlagentyp eine Kondensatoreinheit positioniert, die den Kondensator und die zu seiner Durchlüftung erforderlichen Gebläse, im Allgemeinen Axialgebläse umfasst.

Die Kondensatoreinheit verbindet die beiden Verdampfereinheiten auch festigkeitstechnisch miteinander, so dass die drei Einheiten zusammen mit den Deckeln und Verkleidungsteilen eine Kompaktanlage ergeben.

Bei einer speziellen bekannten Ausführungsform wie in der DE 20 2008 002 054 U1 gezeigt wird wenigstens ein lang gestreckter, horizontal liegender Kondensator verwendet, über dem ein Axialgebläseluftkasten angeordnet ist, dessen Flächenabmessung mindestens so groß wie die Fläche des Kondensators ist. In diesen Axialgebläseluftkasten werden wenigstens ein, meist aber mehrere Axialgebläse in Fahrtrichtung hintereinander so angeordnet, dass sich ihre Rotationswellen in vertikaler Richtung erstrecken. Unter dem Kondensator werden Verbindungsstreben eingebracht, welche die beiden Verdampfereinheiten miteinander verbinden und zugleich den Kondensator stützen. Auch der Axialgebläseluftkasten ist an diesen Verbindungsstreben montiert.

Zwischen dem Kondensator bzw. dem Axialgebläseluftkasten und den links und rechts hiervon angeordneten Verdampfereinheiten sind Luftströmungskanäle vorgesehen, die an ihrer Oberseite Luftansaugöffnungen aufweisen, die durch Gitter abgedeckt sind. An ihrer offenen Unterseite münden diese Luftströmungskanäle in einen zwischen dem Kondensator und dem Fahrzeugdach verbleibenden Luftsammelraum, aus dem heraus durch die Wirkung der Axialgebläse Luft durch den Kondensator gesaugt und nach oben durch mit Gittern abgedeckte Luftaustrittsöffnungen zum Außenraum hin abgeführt wird. Auch wird unter den Stirnseiten des Kondensators, d.h. in Fahrtrichtung vorne und hinten, Luft angesaugt, die aus verschiedenen Öffnungen der Verkleidungsteile einströmt. Dem Kondensator wird also über seinen gesamten Umfang Luft zugeführt. Zusammen mit dem Abstand zum Busdach ergibt sich die Ansaugfläche, deren Größe ein wesentliches Maß für die zuführbare Luftmenge ist.

Nachteilig an dieser bekannten Anordnung ist, dass zur Verbindung der Verdampfereinheiten und zur Montage der Kondensatoreinheit relativ viele Bauteile erforderlich sind. Es werden mehrere in Fahrtrichtung hintereinander angeordnete Tragelemente benötigt, welche die Verdampfereinheiten miteinander verbinden und die Kondensatoreinheit stützen. Über diesen Tragelementen werden der wenigstens eine Kondensator mit einer Höhe von mehr als 50 mm, der Axialgebläseluftkasten, die Axialgebläse selbst und die Luftströmungskanäle zwischen dem Axialgebläseluftkasten und den Verdampferwannen montiert. Das Gewicht und die Kosten dieser Komponenten sind hoch und sie erfordern eine zeitlich aufwändige Montage. Der Axialgebläseluftkasten ist relativ groß und kann nicht mit günstigen, werkzeugfallenden Verfahren hergestellt werden.

Darunter werden solche Verfahren verstanden, bei denen das betreffende Bauteil im verwendungsfertigen Zustand ohne Nachbearbeitung und den Anbau weiterer Zusatzteile einem Formwerkzeug entnommen werden kann.

Die ausreichende und gleichmäßige Belüftung des Kondensators von unten nach oben hängt in starkem Maße vom freien Strömungsquerschnitt unter dem Kondensator und vom Abstand der Axialgebläseflügel vom Kondensator ab. Da die Bauhöhe von Aufdachklimaanlagen wegen der Fahrzeuggesamthöhe und aus Design- und Gewichtsgründen möglichst gering sein soll, steht im Allgemeinen nur ein vergleichsweise geringer freier Querschnitt zum Einströmen der Luft in den Kondensator und die Gebläse zur Verfügung, wodurch die übertragbare Wärmemenge reduziert wird.

Die unter dem Kondensator quer zur Fahrtrichtung verlaufenden Verbindungsstreben beeinträchtigen die freie Luftströmung zusätzlich. Die Axialgebläse, die in geringen Abständen über der oberen Fläche des Kondensators montiert sind, saugen im Wesentlichen nur Luft aus der unmittelbar unter ihnen befindlichen Kreisfläche an. Da der Kondensator im Allgemeinen eine Breite besitzt, die größer als die Durchmesser der Gebläse ist, wird er sowohl quer zur Fahrtrichtung als auch in Längsrichtung nicht gleichmäßig durchlüftet. Außerdem wird beim Ausfall eines Axialgebläses ein großer Teil des Luftstroms vom nächsten Gebläse kurzgeleitet, strömt also nicht durch den Kondensator. In einem solchen Fall reduziert sich die Leistung des Kondensators stärker als es der Fläche des ausgefallenen Gebläses entspricht

Somit liegt der Erfindung die Aufgabe zugrunde, eine Axialgebläseanordnung der eingangs genannten Art so weiterzubilden, dass sie bei einer möglichst geringen Bauhöhe eine gleichförmige Durchlüftung des Kondensators ermöglicht, ein geringes Gewicht besitzt und auf einfache Weise und im Wesentlichen ohne Verwendung von zusätzlichen Teilen zwischen den Verdampfereinheiten montiert werden kann.

Zur Lösung dieser Aufgabe sieht die Erfindung die im Anspruch 1 niedergelegten Merkmale vor.

Durch diese Maßnahmen wird der bisher übliche Axialgebläseluftkasten, aus dessen Innenraum alle verwendeten Axialgebläse gemeinsam Luft absaugen, durch zwei oder mehr Gebläsemodule ersetzt, die in Fahrtrichtung hintereinander angeordnet sind, von denen aber jedes ein eigenes, in Form einer kastenförmigen, nach unten hin offenen Haube ausgebildetes Gehäuse besitzt. Die von der Deckenwand der Haube nach unten ragenden Wände schließen im montierten Zustand unmittelbar an den horizontal liegenden Kondensator in der Weise an, dass praktisch die gesamte Luft, die das Axialgebläse eines jeden einzelnen Gebläsemoduls ansaugt, zwangsweise durch den Kondensator strömen muss. Es sind also keine nennenswerten Nebenströmungswege vorhanden, durch die Luft angesaugt werden könnte, die nicht durch den Kondensator geströmt ist und daher von ihm keine Wärme aufgenommen hat.

Die zwei oder mehr Gebläsemodule, deren Hauben vorzugsweise einen rechteckigen Grundriss aufweisen, werden zwischen den Verdampfereinheiten in Längsrichtung des Fahrzeugs unmittelbar aneinander anschließend so montiert, dass Vorder- und Rückwände der Hauben von einander benachbarten Gebläsemodule unmittelbar aneinander anliegen.

Da nicht mehr allein der kreisförmige Durchmesser der Axialgebläse sondern im Wesentlichen die untere, rechteckige Öffnung der Haube den Flächenbereich des Kondensators definiert, durch den Luft gesaugt wird, ist durch die erfindungsgemäßen Gebläsemodule eine wesentlich bessere Anpassung an die lang gestreckte Fläche des Kondensators möglich, sodass sich eine größere wirksam belüftete Kondensatorfläche und damit eine beträchtliche Leistungsverbesserung ergibt. Dadurch ist es möglich für eine vorgegebene Kondensatorlänge weniger Axialgebläse einzusetzen, als dies beim Stand der Technik erforderlich ist.

Vorzugsweise besitzen die Wände der Hauben der Gebläsemodule an ihren unteren Enden Halterungen für die stabile Aufnahme und Befestigung des Kondensators.

Vorzugsweise umfassen die Gebläsemodule seitlich außerhalb ihrer Seitenwände angeordnete Luftströmungskanäle, die oben liegende Lufteintrittsöffnungen aufweisen, die in der Regel durch Gitter abgedeckt sind. Nach unten sind die Luftströmungskanäle offen und münden in einen zwischen dem Fahrzeugdach, den Verdampfereinheiten und der Unterseite des Kondensators gebildeten Luftsammelraum, aus dem die durch die Axialgebläse angesaugte Luft nach oben durch den Kondensator strömt.

Die Gebläsemodule stellen somit Multifunktions-Einheiten dar, da in ihnen jeweils ein Axialgebläse angeordnet ist, jedes von ihnen einen genauen Flächenbereich des Kondensators definiert, aus dem Luft weitgehend gleichförmig angesaugt wird, jedes von ihnen seitliche Luftströmungskanäle aufweist und sie gemeinsam den Kondensator tragen. Sie bilden somit die alleinigen Verbindungselemente zwischen den Verdampfereinheiten. Gitter, welche die Lufteintrittsöffnungen abdecken, können einstückig mit der Haube hergestellt werden. Da je Aufdach-Klimaanlage mehrere, identische Gebläsemodule Verwendung finden, ist eine koste- und gewichtsoptimierte, wekzeugfallende Produktion möglich.

Vorzugsweise wird ein extrem dünner, liegend angeordneter Flachrohrkondensator (Aluminium-Multiportkondensator) verwendet, der im Vergleich mit den bisher üblichen Rundrohrkondensatoren einen größeren freien Ansaugquerschnitt schafft. Er umfasst eine Vielzahl von Flachrohren, in denen das Kältemittel verflüssigt (kondensiert) wird und die an den Kondensatorenden durch fest verlötete Verbindungsrohre hydraulisch gekoppelt sind. Das Kältemittel wird über einen Rohranschluss und eine Kältemittelleitung einem Kältemittelsammler zugeführt, aus dem heraus es über ein Kondensatorverbindungsrohr mindestens zwei Flachrohren des Kondensators zugeführt wird, in denen es unterkühlt wird, um die nutzbare Enthalpie des Kältemittels zu erhöhen.

Diese und weitere vorteilhafte Ausgestaltungen einer erfindungsgemäßen Axialgebläseanordnung sind in den Unteransprüchen niedergelegt.

Die Erfindung wird im Folgenden anhand eines Ausführungsbeispiels unter Bezugnahme auf die Zeichnung beschrieben. In dieser zeigen:
- Fig. 1: einen schematischen Schnitt durch den zentralen Teil einer mit einer Axialgebläseanordnung gemäß der Erfindung ausgestatteten Aufdach-Klimaanlage,
- Fig. 2: eine perspektivische Draufsicht auf die Klimaanlage aus Fig. 1, wobei von den Verdampfereinheiten nur die leeren Wannen dargestellt sind,
- Fig. 3: eine perspektivische Ansicht von unten der Klimaanlage aus Fig. 1 mit weggelassenem Kondensator und
- Fig. 4: eine der Fig. 3 entsprechende perspektivische Ansicht von unten mit eingebautem Kondensator.

In allen Figuren werden gleiche Teile mit den gleichen Bezugszeichen bezeichnet.

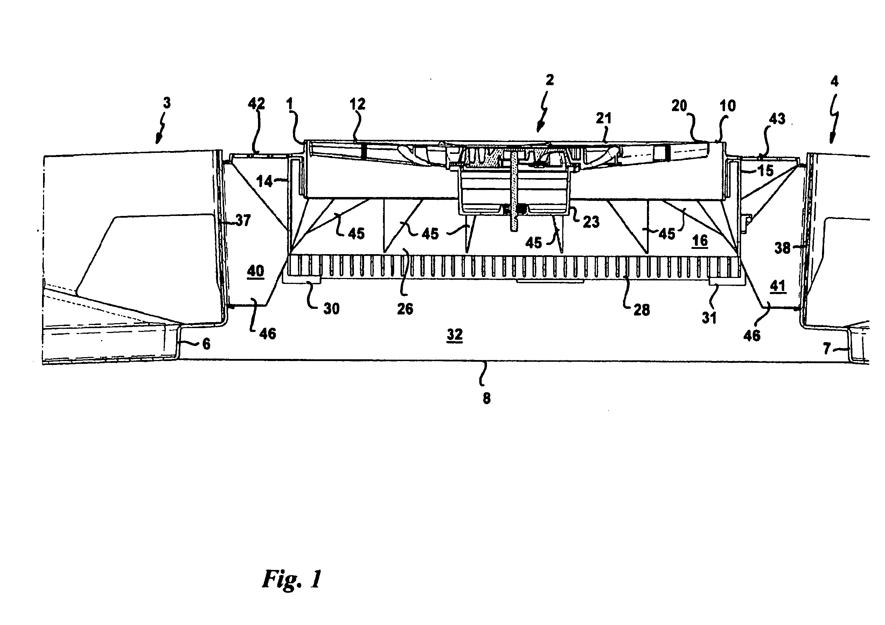

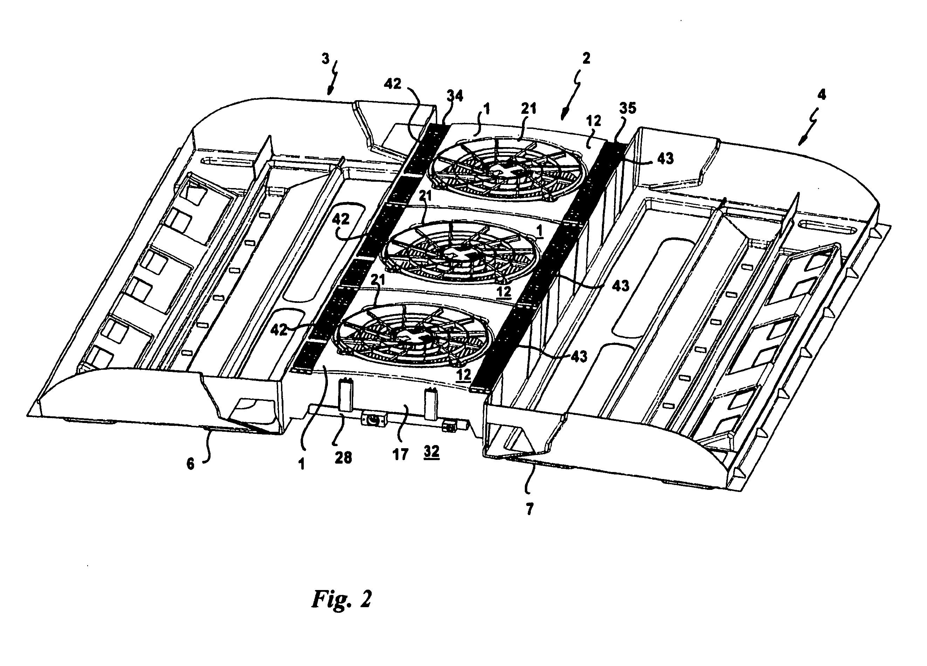

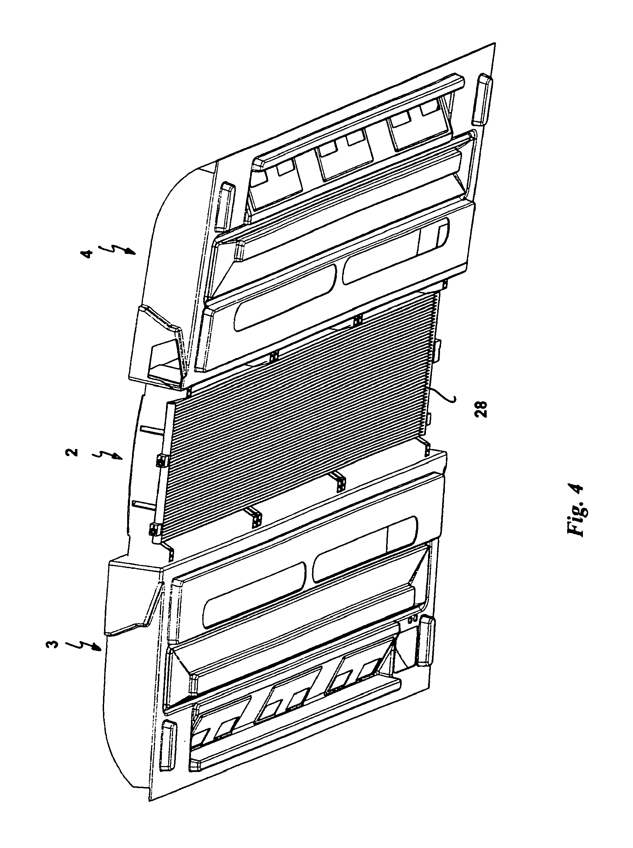

Fig. 1 zeigt einen Vertikalschnitt durch ein erfindungsgemäßes Gebläsemodul 1, das als Teil einer Kondensatoreinheit 2 freitragend zwischen den beiden links und rechts der senkrecht zur Zeichenebene verlaufenden Fahrzeug-Mittelachse angeordneten, nur teilweise wiedergegebenen Verdampfereinheiten 3, 4 montiert ist, die mit ihren Basisbereichen 6, 7 auf dem Fahrzeugdach 8 aufliegen und dort in bekannter Weise befestigt sind. Das Gebläsemodul 1 weist eine kastenförmige, an der Unterseite offene Haube 10 mit rechteckigem Grundriss auf, die eine Deckenwand 12 und vier Wände umfasst, die sich von der Deckenwand 12 aus rechtwinkelig nach unten erstrecken. Es handelt sich dabei um zwei Seitenwände 14, 15 sowie eine Vorderwand 16 und eine in der Schnittdarstellung der Fig. 1 nicht sichtbare, näher beim Betrachter liegende Rückwand 17 (siehe Figuren 2 bis 4).

In der Deckenwand 12 ist eine Luftaustrittsöffnung 20 vorgesehen, in die von oben her ein Axialgebläse 23 mit vertikaler Rotationsachse eingeschoben ist, das mit einem Montageflansch auf der Oberseite der Deckenwand aufliegt und dort befestigt ist. Das Axialgebläse 23 saugt Luft aus einem von der Deckenwand 12, und den vier Wänden 14 bis 17 der Haube 10 umschlossenen Luftansaugraum 26 an und bläst diese nach oben durch ein Abdeckgitter 21 hindurch in die Atmosphäre.

Die unteren Enden der vertikalen Wände 14 bis 17 umschließen eine im Wesentlichen rechteckige Öffnung, die vollständig durch einen horizontal liegenden, sehr flachen Kondensator 28 überdeckt ist, der von Halterungen 30, 31 getragen wir, die sich an den unteren Enden der Seitenwände 14, 15 befinden. Der Kondensator 28 liegt an den unteren Enden der Wände 14 bis 17 nahezu luftdicht an, so dass praktisch die gesamte vom Axialgebläse 23 aus dem Luftansaugraum 26 abgesaugte Luft durch den Kondensator 28 strömen muss.

Unter dem Kondensator 28 befindet sich ein Luftsammelraum 32, der seitlich von den Basisbereichen 6, 7 der Verdampfeinheiten 3, 4 und nach unten vom Fahrzeugdach 8 begrenzt wird.

Die Deckenwand 12 der Haube 10 weist auf beiden Seiten zu den Verdampfeinheiten 3, 4 hin vorstehende, in etwa horizontal verlaufende Schultern 34, 35 auf, die an den Außenwänden 37, 38 der Verdampfeinheiten 3, 4 für eine freitragende Montage des Gebläsemoduls 1 befestigt sind. Die Außenwände 37, 38 schließen mit den neben ihnen zur Mitte hin angeordneten Seitenwänden 14 bzw. 15 Luftströmungskanäle 40, 41 ein, die nach unten zum Busdach 8 hin offen sind. In den Schultern 34, 35 der Deckenwand 12 sind durch Gitter 42, 43 abgedeckte Lufteintrittsöffnungen vorgesehen. Alternativ hierzu können sich an die Außenkanten der Schultern 34, 35 auch nach unten abgewinkelte Wände erstrecken, die im montierten Zustand in direkter Berührung und fester Verbindung mit den der Kondensatoreinheit 2 zugewandten Außenwänden der Verdampfereinheiten 3, 4 stehen.

Somit kann Außenluft auf einem durch Pfeile S gekennzeichneten Strömungsweg durch die Lufteintrittsöffnungen in die Luftströmungskanäle 40 und. 41 und von diesen in den Luftsammelraum 32 gelangen, aus dem heraus sie aufgrund der Saugwirkung des Axialgebläses 23 durch den Kondensator 28 strömt und die Haube 10 durch die Luftausströmöffnung 20 hindurch verlässt.

In bekannter Weise ist es möglich, über nicht dargestellte Öffnungen und diese verschließende, steuerbare Klappen auch Luft aus dem Fahrzeuginneren in den Luftsammelraum 32 anzusaugen und über das Axialgebläse 23 nach außen abzugeben.

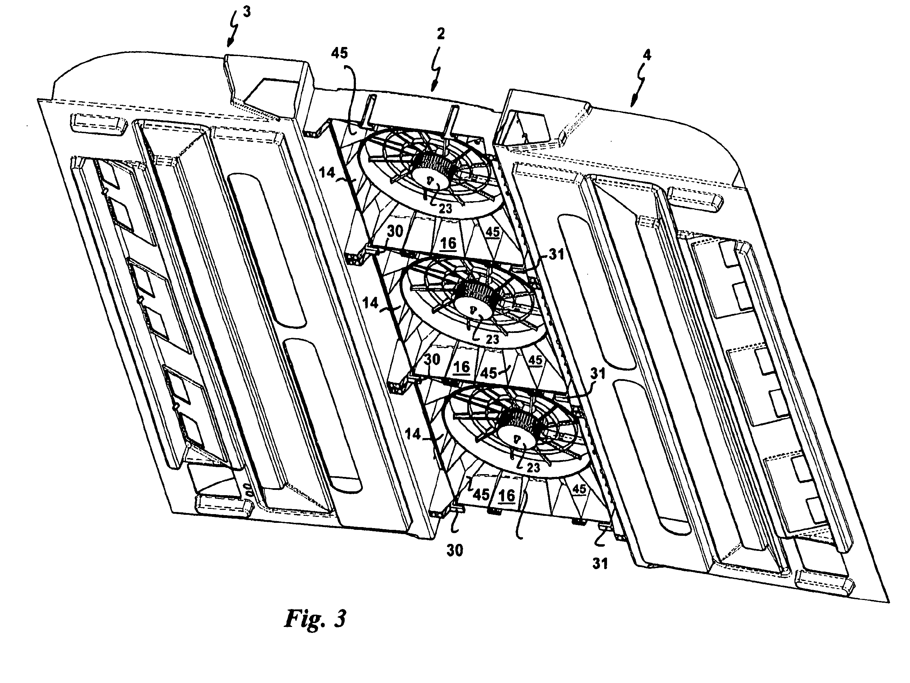

Die in den Figuren 2 und 3 gezeigte Ausführungsform einer erfindungsgemäßen Axialgebläseanordnung umfasst drei Gebläsemodule 1, die in Fahrzeuglängsrichtung hintereinander so angeordnet sind, dass sich die vertikalen Vorder- bzw. Rückwände einander benachbarter Module unmittelbar berühren. Sie überdecken somit die gesamte Fläche des Kondensators 28, der im montierten Zustand von den in Fig. 3 gut sichtbaren Halterungen 30, 31 der Gebläsemodule 1 getragen wird.

Weiterhin sieht man, dass die Hauben 10 der Gebläsemodule 1 durch eine Vielzahl von Versteifungsrippen 45 ausgesteift sind, die den Hauben 10 eine solche Festigkeit verleihen, dass sie den Kondensator 28 ohne weiteres tragen können.

Der Figur 1 lässt sich entnehmen, dass auch in den Luftströmungskanälen 40, 41 Verbindungs-Tragelemente 46 vorgesehen sind, die sich ausgehend von den Seitenwänden 14, 15 erstrecken und den Gebläsemodulen 1 eine hohe Steifigkeit verleihen. Wesentlich an der gesamten Anordnung ist, dass trotz der geringen Gesamt-Bauhöhe der Aufdach-Klimaanlage zwischen der Unterseite des Kondensators 28 und dem Busdach 8 ein ausreichend großer, durch keinerlei Tragteile in seinem Querschnitt verengter Luftsammelraum 32 vorhanden ist.

Darüber hinaus ist durch die luftdichte Aufnahme des Kondensators 28 zwischen den nach unten ragenden Seitenwänden 14, 15 eines jeden Moduls 1 sichergestellt, dass die vom jeweiligen Axialgebläse 23 angesaugte Luft ausschließlich auf Strömungswegen vom Luftsammelraum 32 in den Luftansaugraum 26 gelangen kann, die durch den Kondensator 28 hindurchführen.

Auch ist sichergestellt, dass jedes der Module Luft nur aus der unteren Öffnung seiner eigenen Haube 10 ansaugen kann. Dadurch wird vermieden, dass beispielsweise dann, wenn eines der Axialgebläse 23 ausfällt, die benachbarten Axialgebläse Luft auf einem Kurzschlussweg durch die Luftausströmöffnung 20 des ausgefallenen Axialgebläses 23 ansaugen und wieder an die Atmosphäre abgeben, ohne dass diese Luft durch den Kondensator 28 geströmt ist.

## Patentansprüche

1. Kondensatoreinheit (2) für eine auf einem Fahrzeugdach (8) zu montierende Klimaanlage mit einer Axialgebläseanordnung, die wenigstens zwei in Fahrtrichtung hintereinander angeordnete Axialgebläse (23, 23) und einen im montierten Zustand horizontal liegenden, sich unterhalb der Axialgebläse (23, 23) in Fahrtrichtung erstreckenden, gemeinsamen Kondensator (28) umfasst, wobei zwei im montierten Zustand in Fahrtrichtung links und rechts von der Kondensatoreinheit (2) angeordnete Verdampfereinheiten (3, 4) vorgesehen sind,
**dadurch gekennzeichnet,**
**dass** die Axialgebläseanordnung aus wenigstens zwei in Fahrtrichtung hintereinander angeordneten Gebläsemodulen (1, 1) besteht, von denen jedes folgendes umfasst,
eine im montierten Zustand horizontal verlaufende Tragplatte, welche die Deckenwand (12) einer kastenförmigen, nach unten offene Haube (10) bildet, die von der Deckenwand (12) ausgehende, sich im montierten Zustand nach unten erstreckende Wände (14, 15, 16, 17) besitzt, die zusammen mit der Deckenwand (12) jeweils den Luftansaugraum (26) des betreffenden Gebläsemoduls (1) umschließen, aus dem das zugehörige, an der Unterseite der Tragplatte befestigte Axialgebläse (23) Luft absaugt und durch eine in der Tragplatte vorgesehene Luftaustrittsöffnung (20) in die Atmosphäre abgibt, und
**dass** sich die den Luftansaugraum (26) eines jeden Gebläsemoduls (1, 1) begrenzenden Wände (14, 15, 16, 17) im montierten Zustand so weit nach unten bis zu dem die offene Unterseite der Haube (10) vollständig überdeckenden Kondensator (28) erstrecken und mit diesem so abschließen, dass unter der Wirkung des Axialgebläses (23) nur Luft in den Luftansaugraum (26) des Gebläsemoduls (1) gelangen kann, die zuvor den Kondensator (28) durchströmt hat.

2. Kondensatoreinheit nach Anspruch 1, **dadurch gekennzeichnet, dass** die wenigstens zwei Gebläsemodule (1, 1) an den unteren Endbereichen der Wände (14, 15, 16, 17) des Luftansaugraums (26) Halterungen für den gemeinsamen Kondensator (28) aufweisen.

3. Kondensatoreinheit nach Anspruch 1 oder 2, **dadurch gekennzeichnet, dass** die Deckenwand (12) einer jeden Haube (10) eine im Wesentlichen rechteckige Form aufweist und dass sich ausgehend von dieser Deckenwand (12), im montierten Zustand in Fahrtrichtung gesehen, eine Vorder- und eine Rückwand (16, 17) sowie zwei Seitenwände (14, 15) des Luftansaugraums (26) nach unten erstrecken.

4. Kondensatoreinheit nach Anspruch 3, **dadurch gekennzeichnet, dass** die Deckenwand (12) der Haube eines jeden Gebläsemoduls (1, 1) über die beiden Seitenwände (14, 15) des Luftansaugraums (26) hinaus vorstehende Schultern (34, 35) besitzt, von denen jede die im montierten Zustand an eine der Außenwände (37, 38) der Verdampfereinheiten (3, 4) anschließt und mit dieser und der Außenseite der zugehörigen Seitenwand (14, 15) des Luftansaugraums (26) einen Luftströmungskanal (40, 41) umschließt, der von einer in der Schulter (34, 35) vorgesehenen Lufteintrittsöffnung zu einem unten befindlichen Luftaustritt führt, der in einen unterhalb des horizontal liegenden Kondensators (28) befindlichen Luftsammelraum (32) mündet.

5. Kondensatoreinheit nach Anspruch 4, **dadurch gekennzeichnet, dass** die untere Begrenzung des Luftsammelraums (32) von der Oberseite des Fahrzeugdaches (8) gebildet wird.

6. Kondensatoreinheit nach Anspruch 4 oder 5, **dadurch gekennzeichnet, dass** jede der Lufteintrittsöffnungen durch ein in die Deckenwand (12) der Haube (10) integriertes Gitter (42, 43) abgedeckt ist.

7. Kondensatoreinheit nach einem der vorhergehenden Ansprüche, **dadurch gekennzeichnet, dass** die Haube (10) eines jeden Gebläsemoduls (1, 1) eine Vielzahl von Versteifungen (45) umfasst, die einstückig im Luftansaugraum (26) ausgebildet sind und die Deckenwand (12) der Haube (10) mit den Wänden (14, 15, 16, 17) des Luftansaugraums (26) verbinden.

8. Kondensatoreinheit nach einem der vorhergehenden Ansprüche, **dadurch gekennzeichnet, dass** die Haube (10) eines jeden Gebläsemoduls (1, 1) eine Vielzahl von Verbindungstragelementen (46) umfasst, die einstückig in den Luftströmungskanälen (40, 41) ausgebildet sind.

9. Kondensatoreinheit nach einem der vorhergehenden Ansprüche, **dadurch gekennzeichnet, dass** im montierten Zustand die seitlichen Außenwände (37, 38) der jeweiligen Haube (10) der Gebläsemodule (1) für eine freitragende Halterung der Axialgebläseanordnung mit den Verdampfereinheiten (3, 4) verbunden sind, sodass der unter dem Kondensator (28) befindliche Luftsammelraum (32) frei von Strukturelementen ist, die seinen Querschnitt verringern könnten

10. Kondensatoreinheit nach einem der vorhergehenden Ansprüche, **dadurch gekennzeichnet, dass** der Kondensator (28) ein dünner Aluminium-Multiportkondensator ist.

## Claims

1. Condenser unit (2) for an air conditioning system to be mounted on a vehicle roof (8) with an axial-flow blower arrangement which comprises at least two axial blowers (23, 23) which are arranged one behind the other in the direction of travel, and a common condenser (28) which in the mounted condition lies below the axial blowers (23, 23) and extends horizontally, wherein two evaporator units (3, 4) are provided which in the mounted condition are arranged to the left and the right of the condenser unit (2) in the direction of travel,
**characterized in that** the axial-flow blower arrangement comprises at least two blower modules (1, 1) each of which has
a carrier plate which extends horizontally in the mounted condition and forms the ceiling wall (12) of a box-shaped downwardly open hood (10) which has walls (14, 15, 16, 17) which in the mounted condition extend from the ceiling wall (12) downwardly and delimit together with said ceiling wall (12) the air suction chamber (26) of each blower module (1) out of which the associated axial-flow blower (23) sucks air and discharges said air into the atmosphere through an air outlet opening (20) provided in the carrier plate,
and **in that** the walls (14, 15, 16, 17) delimiting the air suction chamber (26) of each blower module (1, 1) extend in the mounted condition so far downwardly to the condenser (28) completely covering the open underside of the hood (10) and so terminate with the condenser that under the action of the axial-flow blower (23) only air which has previously passed through the condenser (28) can pass into the air suction chamber (26) of the blower module (1).

2. Condenser unit according to claim 1 **characterized in that** the at least two blower modules (1, 1) at the lower end regions of the walls (14, 15, 16, 17) of the air suction chamber (26) have holders for the common condenser (28).

3. Condenser unit according to claim 1 or claim 2 **characterized in that** the ceiling wall (12) of each hood (10) is of a substantially rectangular shape and that a front and a rear wall (16, 17) and two side walls (14, 15) of the air suction chamber (26) extend downwardly from said ceiling wall (12) in the mounted condition as viewed in the direction of travel.

4. Condenser unit according to claim 3 **characterized in that** the ceiling wall (12) of the hood of each blower module (1, 1) has shoulders (34, 35) which project beyond the two side walls (14, 15) of the air suction chamber (26) and each of which adjoins in the mounted condition one of the outside walls (37, 38) of the evaporator units (3, 4) and with same and the outside of the associated side wall (14, 15) of the air suction chamber (26) encloses an air flow passage (40, 41) leading from an air intake opening in the shoulder (34, 35) to a downwardly disposed air outlet which opens into an air collecting chamber (32) beneath the horizontally lying condenser (28).

5. Condenser unit according to claim 4 **characterized in that** the lower boundary of the air collecting chamber (32) is formed by the top side of the vehicle roof (8).

6. Condenser unit as according to claim 4 or claim 5 **characterized in that** each of the air intake openings is covered by a grill (42, 43) integrated into the ceiling wall (12) of the hood (10).

7. Condenser unit according to one of the preceding claims **characterized in that** the hood (10) of each blower module (1) includes a plurality of stiffening means (45) which are provided integrally in the air suction chamber (26) and connect the ceiling wall (12) of the hood (10) to the walls (14, 15, 16, 17) of the air suction chamber (26).

8. Condenser unit according to one of the preceding claims **characterized in that** the hood (10) of each blower module (1, 1) includes a plurality of connecting carrier elements (46) provided integrally in the air flow passages (40, 41).

9. Condenser unit according to one of the preceding claims **characterized in that** in the mounted condition the lateral outside walls (37, 38) of the respective hood (10) of the blower modules (1) are connected to the evaporator units (3, 4) for self-supportingly holding the axial-flow blower arrangement so that the air collecting chamber (32) under the condenser (28) is free from structural elements which could reduce its cross-section.

10. Condenser unit according to one of the preceding claims **characterized in that** the condenser (28) is a thin aluminum multi-port condenser.

## Revendications

1. Unité de condensateur (2) pour une installation de climatisation à monter sur un toit de véhicule (8) avec un système à soufflantes axiales qui comprend au moins deux soufflantes axiales (23, 23) disposées l'une derrière l'autre dans le sens de conduite et un condensateur (28) commun mis en place horizontalement en état de montage et s'étendant sous les soufflantes axiales (23, 23) dans le sens de conduite, deux unités d'évaporateur (3, 4) disposées à gauche et à droite de l'unité de condensateur (2) dans le sens de conduite étant prévues en état de montage,
**caractérisée en ce que**
le système à soufflantes axiales comprend au moins deux modules de soufflante (1, 1) disposés l'un derrière l'autre dans le sens de conduite, chacun de ceux-ci comprenant ce qui suit :
une plaque de support s'étendant horizontalement en état de montage, qui forme la paroi de couverture (12) d'un capot (10) en forme de caisson ouvert vers le bas, pourvu de parois (14, 15, 16, 17) partant de la paroi de couverture (12) et s'étendant vers le bas en état de montage, lesquelles entourent avec la paroi de couverture (12) un compartiment d'aspiration d'air (26) du module de soufflante (1) concerné, dont l'air est aspiré par la soufflante axiale (23) correspondante fixée contre la face inférieure de la plaque de support et est libéré dans l'atmosphère par une ouverture de sortie d'air (20) prévue dans la plaque support, et
**en ce que** les parois (14, 15, 16, 17) délimitant le compartiment d'aspiration d'air (26) de chaque module de soufflante (1, 1) s'étendent vers le bas en état de montage jusqu'au condensateur (28) recouvrant complètement la face inférieure ouverte du capot (10), et contactent celui-ci de telle manière que, par l'action de la soufflante axiale (23), seul de l'air ayant préalablement traversé le condensateur (28) peut arriver dans le compartiment d'aspiration d'air (26) du module de soufflante (1).

2. Unité de condensateur selon la revendication 1, **caractérisée en ce que** les au moins deux modules de soufflante (1, 1) présentent dans les zones d'extrémité inférieures des parois (14, 15, 16, 17) du compartiment d'aspiration d'air (26) des supports pour le condensateur (28) commun.

3. Unité de condensateur selon la revendication 1 ou 2, **caractérisée en ce que** la paroi de couverture (12) de chaque capot (10) a une forme sensiblement rectangulaire, et **en ce qu'**en état de montage, une paroi avant et une paroi arrière (16, 17) ainsi que deux parois latérales (14, 15) du compartiment d'aspiration d'air (26) s'étendent vers le bas depuis ladite paroi de couverture (12) vue dans le sens de conduite.

4. Unité de condensateur selon la revendication 3, **caractérisée en ce que** la paroi de couverture (12) du capot de chaque module de soufflante (1, 1) est pourvue d'épaulements (34, 35) dressés au-dessus des deux parois latérales (14, 15) du compartiment d'aspiration d'air (26), chacun de ceux-ci étant adjacent à une des parois extérieures (37, 38) des unités d'évaporateur (3, 4) en état de montage et entourant avec celle-ci et la face extérieure de la paroi latérale (14, 15) correspondante du compartiment d'aspiration d'air (26) un canal d'écoulement d'air (40, 41) menant d'une ouverture d'entrée d'air prévue dans l'épaulement (34, 35) à une sortie d'air située sur le dessous et débouchant dans un compartiment collecteur d'air (32) situé sous le condensateur (28) horizontal.

5. Unité de condensateur selon la revendication 4, **caractérisée en ce que** la limité inférieure du compartiment collecteur d'air (32) est formée par la face supérieure du toit du véhicule (8).

6. Unité de condensateur selon la revendication 4 ou 5, **caractérisée en ce que** chaque ouverture d'entrée d'air est recouverte par une grille (42, 43) intégrée à la paroi de couverture (12) du capot (10).

7. Unité de condensateur selon l'une des revendications précédentes, **caractérisée en ce que** le capot (10) de chaque module de soufflante (1, 1) comporte une pluralité de raidisseurs (45) formés d'un seul tenant dans le compartiment d'aspiration d'air (26) et qui relient la paroi de couverture (12) du capot (10) aux parois (14, 15, 16, 17) du compartiment d'aspiration d'air (26).

8. Unité de condensateur selon l'une des revendications précédentes, **caractérisée en ce que** le capot (10) de chaque module de soufflante (1, 1) comporte une pluralité d'éléments supports de connexion (46) formés d'un seul tenant dans les canaux d'écoulement d'air (40, 41).

9. Unité de condensateur selon l'une des revendications précédentes, **caractérisée en ce qu'**en état de montage, les parois latérales extérieures (37, 38) de chaque capot (10) des modules de soufflante (1) sont raccordées aux unités d'évaporateur (3, 4) pour un support en porte-à-faux du système à soufflantes axiales, de telle manière que le compartiment collecteur d'air (32) situé sous le condensateur (28) est exempt d'éléments structurels susceptibles d'en réduire la section transversale.

10. Unité de condensateur selon l'une des revendications précédentes, **caractérisée en ce que** le condensateur (28) est un condensateur multiport en aluminium.
